# EUROPEAN PATENT SPECIFICATION

(11) **EP 0 531 670 B1**
(45) Date of publication and mention of the grant of the patent: **10.04.1996**
(21) Application number: 92112266.9
(22) Date of filing: 17.07.1992
(51) Int. Cl.: G10H 1/00

(54) **Data transmission high-speed processing device**
Vorrichtung zur Datenverarbeitung mit hohen Geschwindigkeit bei Datenübertragung
Dispositif de traitement accéléré pour transmission de données

(30) Priority: 31.07.1991 JP 216109/91
(43) Date of publication of application: 17.03.1993
(73) Proprietor: RICOS CO., LTD., Miyakojima-ku, Osaka (JP)
(72) Inventor: Tsumura, Mihoji, Miyakojima-ku, Osaka (JP)
(74) Representative: Hering, Hartmut, Dipl.-Ing.

(56) References cited:
- EP-A- 0 427 447
- FR-A- 2 523 786
- US-A- 4 124 773

## Description

### BACKGROUND OF THE INVENTION

### 1. FIELD OF THE INVENTION

The invention relates to a device designed to speed up the data processing operations required for the downloading of digitally coded music by way of a public telephone line to a terminal unit and the subsequent reproduction of said music by said terminal unit. The invention is particularly well suited to the transmission of data such as karaoke music, computer game data or other types of data which are likely to call for comparatively frequent transmissions.

### 2. DESCRIPTION OF THE PRIOR ART

Equipment which is designed to permit the download of digital data by way of a public telephone line from a host computer has been well known for a long time now. Since the data relating to karaoke music and computer games is also digitalized data, it is thus possible to download this type of music and game program data using known means. There are also well known systems for the transmission of music data, for example, by way of the current videotex network or by public telephone lines using a personal computer as the user terminal. If the power of the musical expression itself is to be enhanced, however, then this necessarily entails an increase in the amount of data used and, in the case of PCM transmission, for example, an extremely long time would in this case be required for the transmission of just one piece of music. Such systems are not, therefore, all that well suited for the sort of data that needs to be transmitted frequently. The present inventors have already, in fact, disclosed techniques for the use of MIDI data, created in accordance with the MIDI standard, as karaoke music data and for the transmission of said data along public telephone lines (US PATENT NO. 5046004, US SER NO. 07/605,506). In this case, since the size of MIDI data is comparatively small, the time required for the transmission of this type of data is not particularly long. Even so, if the data is to be transmitted fairly frequently, then there is always a clear case to be made for increasing the speed with which said data is processed.

One very effective way of speeding up the processing of data is to reduce its size and one way in which this can be achieved is by converting said data to a coded form. The inventors make use of MIDI data in their karaoke music reproduction device but the MIDI standard also stipulates the use of conditional jump symbols in order to prevent the volume of data from becoming too large.

The serial processing of MIDI data, which contains of this type of jump symbol and which is transmitted serially by a system such as videotex, can on occasions, however, prove awkward. In other words, the use of conditional jump symbols as a structural feature of MIDI data means that occasions often arise for the issue of instructions for the processing of data strings the receipt of which has not, in fact, been fully completed and this leads in turn to the breakdown of the processing operation or else to erratic processing. If this sort of problem is to be avoided, however, then this means that a piece of music must always be fully downloaded before the processing operations relating to the reproduction of said music can begin and this in turn means that there is inevitably going to be a long wait when accessing the host computer from a terminal unit with a request for a piece of music or other required data. Under the above circumstances, if the amount of data applicable to a particular piece of music is increased to, say, 200K for the purpose of improving the quality of the final product, the whole transfer process including error correction procedures is likely to take about five minutes, even with the help of a standard high-speed modem. Even using a digital line with a transmission speed of, say 64kbps, a piece of music could still not be transferred in much less than about 30 seconds.

In the area of computer communications, however, in cases where a regular type of personal computer is used as the terminal unit, the following considerations also fall to be dealt with. First of all, personal computers are capable of operating with units as large as files and, with the help of the operating system (OS), of carrying out the processing operations required both for the serial receipt and the reproduction of such files. Existing OS are not, on the other hand, capable of carrying out more than one processing operation at the same time with the result that a personal computer cannot receive data and simultaneously output said data to a MIDI sound source. Furthermore, even if we assume for the moment that a suitable application program could be developed to rectify this situation, there are also limitations due to the configuration of the memory and the control of peripheral devices and this in turn means that the accuracy of the time processing of music reproduction is poor. The net effect of these problems is either to prevent or at least to reduce the efficacy of karaoke music reproduction. Moreover, since computer game programs also frequently contain a substantial number of conditional jump instructions, these are also subject to the same sorts of drawbacks as were outlined above with respect to the transmission of MIDI data. In fact, since the volume of data required for computer game programs is generally larger, the problems are to that extent proportionally greater.

EP-A-0 427 447 relates to a karaoke music reproduction device for the reproduction of music and lyrics by the selection of a piece of music from a database. The database can be stored in a host computer memory from which data is downloaded as required via a public analog line or a public digital line. The reproduction karaoke device generates an audio signal from a sound source using a MIDI signal. The music data consists of many pieces of music stored in a memory device. The music generation processing operations are carried out by two microprocessors, each assigned a different set of functions to speed up the overall processing. The receipt and transfer of data of the sound source from the sequencer is carried out in parallel. The data is subsequently output in parallel and the contents of the buffer are monitored constantly to prevent overflow malfunctions. Clock time is divided to enable the generation of trigger signals to control tempo. By variation of the timing of the trigger signals in accordance with tempo data taken from the data stream, the tempo can be varied while reducing the reproduction time processing load.

It is a primary object of this invention to provide a technique which, in the event of the transmission of music or computer game program data from a host computer to a terminal unit, will enable said data to be processed quickly enough to create the impression that the processing operations relating to the receipt of said data and those operations relating to the subsequent onward transmission of said data to various devices connected further downstream are all carried out in parallel.

It is another object of the invention to provide a technique whereby, on receipt of data such as MIDI data or computer game program data that contains large numbers of jump instructions, each data string received is retransmitted in series rather than waiting until all the data has been received before initiating the onward transmission operations as is necessarily the case with a conventional OS.

It is yet another object of the invention to keep the content of the above techniques as simple as possible. The above objects are achieved by a device according to claim 1. Especially, the invention incorporates certain basic features whereby each string of data, which has been digitalized and assembled for transmission in packet form, is subsequently received by way of a receive interface, for example, each packet also being provided with its own address to enable it to be written into any available memory area. At the same time, a trigger signal is also output from the interface at specified but non-specific intervals and this acts as a signal to start the retrieval process whereby each item of data is read out of each address in the shared memory area in the order of assigned priority, converted to serial signal form and output to various devices which are connected further downstream.

The interface itself receives the music data in packet form and carries out the necessary error correction procedures after which it writes the contents of the packets into the shared memory areas further downstream in accordance with a predetermined set of instructions. The interface is, however, also designed in such a way as to enable it to make the execution of these two basic operations appear to be simultaneous. Said memory area effectively functions as a series of buffers into any of which data can be written in packet sized units, provided only that the selected area is already clear. The arrival of a trigger signal then starts the memory area address retrieval operation whereby each data packet is again read out in the assigned order of priority and then processed.

A number of additional objects, features and advantages offered by the present invention may be clarified by reference to the following detailed description of the preferred embodiment of the invention and the accompanying drawing.

### DESCRIPTION OF THE DRAWING

The drawing is a block diagram illustrating the preferred embodiment of the invention.

### DESCRIPTION OF THE PREFERRED EMBODIMENT

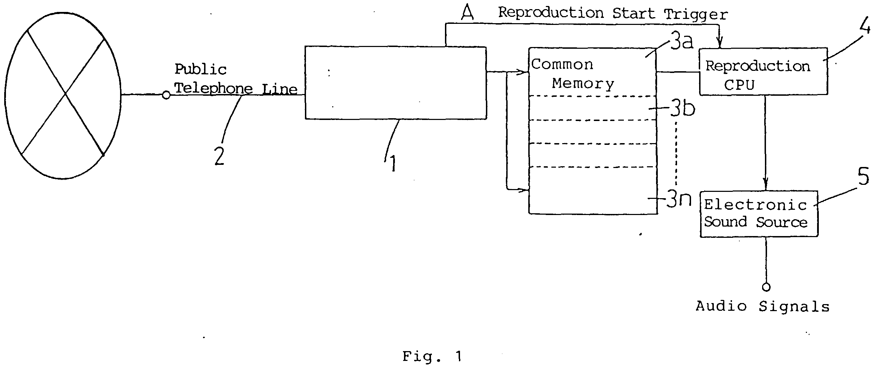

There follows a detailed description of the preferred embodiment of the invention by reference to the accompanying drawing. Figure 1 is a block diagram showing the configuration of the invention as used for the receipt and transmission of MIDI data. In the figure, 1 is a communication interface, typically either a modem or a digital line adapter. 2 is a public telephone line which is in turn connected to a public telephone network. If the public telephone line 2 is an analog line, the interface 1 will be a modem whereas if the public telephone line 2 is a digital line, the interface 1 will be a digital line adapter. Moreover, the interface 1, as defined for the purposes of the preferred embodiment of the invention, not only controls the receipt and transmission of data but also holds a set of instructions in the form of a program which enables it to store received data packet by packet directly to the memory area. A host computer (not included in the drawing), containing a database that holds a large volume of digitally coded music data, is also connected to said public telephone network. Communication between the host computer and the device of the invention, as represented by the preferred embodiment, is carried out in packet form in order to keep the level of transmission error to a minimum and involves the downloading of specified data on request. 3a, 3b - 3n are a plurality of shared memory areas controlled by both the communication interface 1 and a microprocessor 4, said communication interface 1 storing the music data it receives in said memory areas serially and in the form of individual packets in accordance with the set of instructions which it holds. The header of each item of data stored in the shared memory areas 3a - 3n is assigned an address in accordance with the order in which it was received. For high-speed data processing, semiconductor memories offer certain physical advantages for use as shared memories and they are for this reason to be preferred. This does not mean that the shared memory areas 3a - 3n should necessarily be made up of more than one physically independent memory since it may equally be made up of a single physical memory device providing only that said device is capable of division into the required number of memory areas. The microprocessor 4 accesses the data written into the shared memory 3a - 3n addresses and reads it out in packet sized units in a predetermined order. These data strings are then output serially to an electronic sound source 5, such as a synthesizer, or some other downstream device. The electronic sound source 5, which is designed to operate in accordance with the MIDI standard, uses the data strings output by the microprocessor 4 in the form of MIDI signals as a basis for the generation, using preprogrammed commands, of audio signals which are then output to an audio device (not included in the drawing) connected further downstream and comprising elements such as an amplifier and a speaker. The transmission of the MIDI signals themselves is initiated by the output of a trigger signal A from the interface 1 to the microprocessor 4. Said trigger signal A is output when the interface 1 writes data into a selected part of the shared memory area 3.

There need not, moreover, be a specified correspondence between the packets controlled by the interface 1 and the plurality of shared memory areas 3a - 3n. All that is required is that each of the strings of data received in packet form, and each with its own address, be written into any selected area of shared memory which is free following the removal of the previous data. This is because the readout order of the data will subsequently be determined by the microprocessor 4 by individual retrieval of the addresses written into each of said shared memory areas.

There now follows a description of a typical series of operations carried out using the invention as represented by the preferred embodiment outlined above. First of all, the terminal unit, which houses the invention, accesses the host computer by some appropriate means and requests a particular piece of music. The host computer responds by transmitting the data corresponding to the piece of music requested in order starting with the first packet by way of a public telephone line to said terminal unit. On receipt of the first packet, the interface 1 first carries out transmission error processing after which it writes the contents of the packet into any one of the shared memory areas 3a - 3n that happens to be free. At the same time, the interface 1 also outputs a trigger signal A to the microprocessor 4, thereby providing said microprocessor 4 with the signal it requires to retrieve the files written into the shared memory areas 3a - 3n. The interface processes each of the packets subsequently received in exactly the same way.

It should also be noted that the timing of the output of the trigger signal A need not be confined to the timing described in the above explanation. In the case of karaoke music data, for example, the first part of the music data or, in other words, the first packet may well contain control or lyric data and it is preferable, therefore, if the output of the trigger signal A can be delayed at least until the writing of the contents of the first few packets of data into the shared memory area 3 has been completed. At the same time, upon confirmation of the receipt of a trigger signal A, the microprocessor 4 first retrieves the addresses of the data written into the shared memory areas 3a - 3n and then reads out the data in each of the memory units in accordance with the assigned priority order of each address. The data is then converted to a MIDI data string and transmitted in the form of MIDI signals to the electronic sound source 5. Said electronic sound source 5 responds by outputting audio signals which are subsequently reproduced in the form of music by the audio device connected further downstream.

Since the data relating to any given piece of music is likely to be divided for transmission purposes into a large number of separate packets, the contents of new packets of data will inevitably continue to be received even while the microprocessor 4 is in the process of reading data back out of the shared memory areas 3a - 3n. Nevertheless, the interface 1 still continues the processing of successive packets of data by repeating the processing operations outlined above until the last packet of data relating to said piece of music has been processed. The determination of the point at which the processing of a piece of music is complete may be based, for example, on the size of said piece of music as indicated in the control data which is normally included in the header received at the start of the data transmission.

The present invention is thus designed such that music data transmitted in packet form can be processed packet by packet by an interface and then written into a plurality of shared memory areas, said data subsequently being read from said shared memory areas by a microprocessor in a priority order determined in accordance with the addresses included with said data, and finally transmitted to a device connected further downstream. Thus, by contrast with the conventional sort of design which requires that all the music data be received before any of it can be transmitted on to the electronic sound source, the present invention carries out transmission processing whenever it receives the appropriate trigger signal and the music is immediately reproduced by way of the electronic sound source, thereby ensuring that the time-lag between the issue of a request and the start of reproduction of the requested piece of music is kept to an absolute minimum.

Again, since the data is transmitted in packet form, the error correction procedure is correspondingly rigorous and the problem of faulty reproduction due to transmission errors has thus been more or less eliminated.

For explanatory purposes, the transmission data used in the preferred embodiment outlined above was confined to music data in the form of MIDI signals. This need not necessarily be the case, however, and it would be equally acceptable if the data were made up of, for example, computer game program data. In the latter case, the device connected downstream of the microprocessor 4 would, of course, need to be a computer game terminal rather than a sound source 5 as in the preferred embodiment above. The fundamental design of this sort of system would nevertheless be the same as that of the preferred embodiment in all essential details.

Also, in the preferred embodiment, the download of data from the host computer was handled exclusively by the interface but, again, this need not be the case and a network control unit (NCU) could equally well be used as a means of calling the required telephone number in order to access the host computer.

## Claims

1. A data transmission high-speed processing device which is installed in a terminal device for use during transmission to said terminal device of packets of data assembled from digitally coded data stored in a database in a host computer and which comprises
an interface (1) for the receipt of said data, and
a microprocessor (4)
**characterized in that**
it further comprises a shared memory (3a-3n) which comprises a plurality of memory areas (3a-3n) and which assigns addresses to each packet-sized unit of data received by said interface (1) according to the order in which it was received and then writes said data, still in the same packet-sized units, into any available memory area (3a-3n), and
in that said microprocessor (4), in response to a trigger signal (A) output from said interface (1) at selected intervals as a signal to start retrieval from said shared memory (3a-3n), reads all data stored in said shared memory in address priority order, converts said data to a serial data string and then retransmits it.

2. The data transmission high-speed processing device according to claim 1, in which the data comprises music data created in accordance with the MIDI standard and in which the data strings transmitted from the microprocessor (4) are input to an electronic sound source (5).

3. The data transmission high-speed processing device according to claim 1, in which the data comprises computer game program data and in which the data strings transmitted from the microcomputer (4) are input to a computer game unit.

4. The data transmission high-speed processing device according to any of the claims 1 to 3 in which the memory area (3a-3n) comprises a plurality of semiconductor memories into each of which can be written, and from each of which can be read, a data string equivalent in size to one packet of data.

5. The data transmission high-speed processing device according to any of the claims 1 to 3 in which the memory area (3a-3n) comprises a single semiconductor memory.

6. The data transmission high-speed processing device according to any of the claims 1 to 5 in which the trigger signal (A) is output to the microcomputer (4) to coincide with the receipt of the first packet of data.

7. The data transmission high-speed processing device according to any of the claims 1 to 5 in which the trigger signal (A) is output to the microcomputer (4) to coincide with the receipt of the second and subsequent packets of data.

## Patentansprüche

1. Datenverarbeitungsvorrichtung für eine Übertragung mit hoher Geschwindigkeit, die in einer Endgerätevorrichtung eingebaut ist, zur Verwendung während einer Übertragung von Paketen von Daten zur Endgerätevorrichtung, die aus digital codierten Daten zusammengefügt sind, die in einer Datenbasis in einem Hostcomputer gespeichert sind, und welche folgendes aufweist:
eine Schnittstelle (1) für den Empfang der Daten und einen Mikroprozessor (4)
**dadurch gekennzeichnet, daß**
sie weiterhin einen geteilten Speicher (3a-3n) aufweist, der eine Vielzahl von Speicherbereichen (3a-3n) aufweist und der Adressen jeder Einheit von Daten in Paketgröße zuordnet, die von der Schnittstelle (1) gemäß der Reihenfolge empfangen werden, in der sie empfangen wurden, und die die Daten dann noch in denselben Paketgrößeneinheiten in einen beliebigen verfügbaren Speicherbereich (3a-3n) schreibt, und
der Mikroprozessor (4) in Antwort auf ein Triggersignal (A), das von der Schnittstelle (1) in ausgewählten Intervallen als Signal zum Starten einer Wiedergewinnung aus dem geteilten Speicher (3a-3n) ausgegeben wird, alle im geteilten Speicher gespeicherten Daten in einer Adressenprioritätsreihenfolge liest, die Daten in eine serielle Datenkette umwandelt und sie dann erneut sendet.

2. Datenverarbeitungsvorrichtung für eine Übertragung mit hoher Geschwindigkeit nach Anspruch 1, wobei die Daten Musikdaten sind, die gemäß dem MIDI-Standard erzeugt sind, wobei die Datenketten, die vom Mikroprozessor (4) gesendet werden, einer elektronischen Klangquelle (5) eingegeben werden.

3. Datenverarbeitungsvorrichtung für eine Übertragung mit hoher Geschwindigkeit nach Anspruch 1, wobei die Daten Computerspielprogrammdaten sind und wobei die vom Mikrocomputer (4) gesendeten Datenketten einer Computerspieleinheit eingegeben werden.

4. Datenverarbeitungsvorrichtung für eine Übertragung mit hoher Geschwindigkeit nach einem der Ansprüche 1 bis 3, wobei der Speicherbereich (3a-3n) eine Vielzahl von Halbleiterspeichern aufweist, in jeden von denen geschrieben werden kann, und aus jedem von denen gelesen werden kann, und zwar eine Datenkette, die größenmäßig gleich einem Datenpaket ist.

5. Datenverarbeitungsvorrichtung für eine Übertragung mit hoher Geschwindigkeit nach einem der Ansprüche 1 bis 3, wobei der Speicherbereich (3a-3n) ein einzelner Halbleiterspeicher ist.

6. Datenverarbeitungsvorrichtung für eine Übertragung mit hoher Geschwindigkeit nach einem der Ansprüche 1 bis 5, wobei das Triggersignal (A) zum Mikrocomputer (4) derart ausgegeben wird, daß es mit dem Empfang des ersten Datenpaketes übereinstimmt.

7. Datenverarbeitungsvorrichtung für eine Übertragung mit hoher Geschwindigkeit nach einem der Ansprüche 1 bis 5, wobei das Triggersignal (A) zum Mikrocomputer (4) derart ausgegeben wird, daß es mit dem Empfang des zweiten und nachfolgender Datenpakete übereinstimmt.

## Revendications

1. Dispositif de traitement à haute vitesse pour transmission de données qui est installé dans un dispositif terminal destiné à être utilisé durant la transmission vers ledit dispositif terminal de paquets de données assemblées à partir de données codées numériquement stockées dans une base de données d'un ordinateur principal et qui comprend
une interface (1) destinée à la réception desdites données
et un microprocesseur (4)
**caractérisé en ce que**
il comprend en outre une mémoire partagée (3a-3n) qui comprend une pluralité de zones de mémoire (3a-3n) et qui attribue des adresses à chaque ensemble de données en forme de paquet reçu par ladite interface (1) selon l'ordre dans lequel il a été reçu et qui écrit ensuite lesdites données, qui se trouvent encore dans les mêmes ensembles en forme de paquet, dans une zone quelconque de mémoire disponible (3a-3n), et
en ce que ledit microprocesseur (4), en réponse à un signal de déclenchement (A) sort de ladite interface (1) à intervalles choisis, comme un signal pour débuter la récupération à partir de ladite mémoire partagée (3a-3n), lit toutes les données stockées dans ladite mémoire partagée suivant l'ordre de priorité d'adresse, convertit lesdites données en une chaîne de données en série et la retransmet ensuite.

2. Dispositif de traitement à haute vitesse pour transmission de données selon la revendication 1, dans lequel les données sont constituées de données musicales créées selon le standard MIDI et dans lequel les chaînes de données transmises depuis le microprocesseur (4) entrent dans une source de son électronique (5).

3. Dispositif de traitement à haute vitesse pour transmission de données selon la revendication 1, dans lequel les données comprennent des données de programmation de jeu par ordinateur et dans lequel les chaînes de données transmises depuis le micro-ordinateur (4) entrent dans un module de jeu par ordinateur.

4. Dispositif de traitement à haute vitesse pour transmission de données selon l'une quelconque des revendications 1 à 3 dans lequel la zone de mémoire (3a-3n) est constituée d'une pluralité de mémoires à semi-conducteur dans chacune desquelles il est possible d'écrire une chaîne de données équivalant en dimension à un paquet de données, et à partir desquelles il est possible de les lire.

5. Dispositif de traitement à haute vitesse pour transmission de données selon l'une quelconque des revendications 1 à 3 dans lequel la zone de mémoire (3a-3n) est constituée d'une mémoire unique à semi-conducteur.

6. Dispositif de traitement à haute vitesse pour transmission de données selon l'une quelconque des revendications 1 à 5 dans lequel le signal de déclenchement (A) est émis vers le micro-ordinateur (4) pour coïncider avec la réception du premier paquet de données.

7. Dispositif de traitement à haute vitesse pour transmission de données selon l'une quelconque des revendications 1 à 5 dans lequel le signal de déclenchement (A) est émis vers le micro-ordinateur (4) pour coïncider avec la réception du deuxième paquet de données et de ceux qui suivent.
